# DEMANDE DE BREVET EUROPEEN

(11) **EP 4 300 045 A1**
(43) Date de publication de la demande: **03.01.2024**
(21) Numéro de dépôt: 22305930.4
(22) Date de dépôt: 27.06.2022
(51) Int. Cl.: G01C 21/34, G01C 21/00

(54) **CONVERTISSEUR DE DONNÉES ENTRE UNE PLATEFORME DE GESTION D'UN SITE INDUSTRIEL ET AU MOINS UN SYSTÈME DE NAVIGATION**

(71) Demandeur: TotalEnergies OneTech, 92400 Courbevoie (FR); Uavia, 94400 Vitry-sur-Seine (FR)
(72) Inventeur: PELE, Pierre, 94400 VITRY SUR SEINE (FR); VILPOUX, Pierre, 94400 VITRY SUR SEINE (FR); DA VELA, Julien, 94400 VITRY SUR SEINE (FR); AUDIBERT, Annie, 78290 CROISSY SUR SEINE (FR)
(74) Mandataire: Lavoix

(57) **Abrégé**

L'invention concerne un convertisseur de données entre une plateforme électronique (100) de gestion d'un site industriel et au moins un système de navigation (200i) sur ledit site, comprenant :
- un module d'interface (310) apte à recevoir dynamiquement de ladite plateforme des données courantes de types différents, d'exploitation du site,
- un module de conversion (330) apte à traiter numériquement lesdites données courantes en fonction de règles de conversion mémorisées, pour engendrer au moins une cartographie dynamique de valeur de risque(s) du site industriel,
- au moins un module d'interface (320i), communiquant avec un système de navigation associé (200i), apte à sélectivement lui transmettre des données de risque de chaque cartographie, pour prise en compte par ledit système de navigation dans la mise à jour des trajectoires de déplacement sur ledit site.

## Description

### Domaine de l'invention

La présente invention concerne d'une façon générale le domaine du déplacement de robots ou de personnes notamment sur des sites présentant des problématiques de parcours.

Elle concerne plus particulièrement l'interaction entre des sites physiques à surveiller (industries, installations portuaires, zones urbaines, etc.) dotés d'une représentation numérique statique et dynamique et des systèmes de navigation notamment pour robots tels que des drones de surveillance, des robots terrestres ou encore des personnes.

### Etat de la technique

Une approche conventionnelle lorsque l'on souhaite déployer un système de navigation sur un site à des fins notamment de surveillance consiste à créer ex nihilo une cartographie du site et à concevoir le système de navigation pour qu'il exploite cette cartographie. La cartographie peut être ajustée dynamiquement en fonction de paramètres ou autres données appliqués directement en entrée du système de navigation. Le document WO 2021 001768 A1 donne un exemple d'un tel système de navigation.

### Résumé de l'invention

Un objet de la présente invention est de permettre à un site doté de sa propre modélisation ou « maquette » numérique et à un ou plusieurs systèmes de navigation d'équipements mobiles de coopérer de façon particulièrement simple et universelle, sans contraindre à des efforts d'adaptation significatifs dans les deux environnements.

On propose à cet effet un convertisseur unifié de données entre une plateforme électronique de gestion d'un site industriel et au moins un système de navigation sur ledit site, le convertisseur étant apte à générer des données dynamiques liées à l'exploitation du site industriel et le(s) système(s) de navigation étant apte(s) à exploiter notamment des données cartographiques du site pour mettre à jour en temps réel, en fonction d'ordres de mission, des trajectoires de déplacement de personnes et/ou véhicules habités ou non habités sur le site, le convertisseur comprenant :
- un module d'interface avec la plateforme électronique de gestion apte à recevoir de façon dynamique de la part de ladite plateforme des données courantes de types différents, d'exploitation du site industriel,
- un module de conversion apte à traiter numériquement lesdites données courantes en fonction de règles de conversion mémorisées, pour engendrer à partir desdites données au moins une cartographie dynamique de valeur de risque(s) du site industriel,
- au moins un module d'interface, communiquant avec un système de navigation associé, apte à sélectivement transmettre audit système de navigation associé des données de risque contenues dans la ou lesdites cartographies dynamiques de valeur de risque(s), pour prise en compte par ledit système de navigation associé dans la mise à jour des trajectoires.

Suivant d'autres aspects avantageux de l'invention, le convertisseur comprend une ou plusieurs des caractéristiques suivantes, prises isolément ou suivant toutes les combinaisons techniquement possibles :
- le convertisseur comprend des moyens pour adapter la cartographie générée en fonction de la nature du système de navigation utilisateur de ladite cartographie sur la base d'informations caractéristiques du système de navigation, communiquées par ledit système au module d'interface ;
- au moins une cartographie est tridimensionnelle ;
- lesdites données courantes de différents types comprennent des données choisies dans un groupe comprenant :
   - des données de localisation d'opérateurs,
   - des données de capteurs,
   - des données de zonage de risque,
   - des données de localisation d'interventions de maintenance ou de réparation ;
- les données comprennent des données générées par au moins un équipement mobile lié à une personne ou un véhicule habité ou non utilisant ledit système de navigation ;
- le module de conversion est apte à mémoriser différentes règles de conversion pour différents types de données ;
- au moins certaines règles de conversion du module de conversion sont communes à au moins deux types différents de données et configurées pour prendre en compte lesdites données de types différents pour générer une cartographie commune auxdites données de types différents ;
- au moins une cartographie dynamique de valeur(s) de risque comprend une pluralité de plages géographiques, à tous emplacements d'une plage donnée étant associée la même valeur de risque ;
- au moins une cartographie dynamique de risque comprend des valeurs de risque(s) potentiellement différentes pour chaque point définissant ladite cartographie ;
- lesdites données courantes de différents types comprennent des données de type cartographique ;
- les règles de conversion associées aux données courantes de type cartographique comprennent des règles de conversion de données en valeurs de risque(s) et des règles de conversion de référentiel ;
- certaines données courantes d'exploitation du site sont des données temps réel fournies à partir d'au moins un équipement mobile appartenant à un système de navigation se déplaçant sur le site et appliquées en retour à la plateforme électronique de gestion du site en tant que données courantes via le convertisseur de données ;
- lesdites données temps réel fournies à partir d'au moins un véhicule comprennent des données de présence sur site obtenues par analyse d'images prises avec un capteur d'images de l'équipement mobile.

L'invention a également pour objet un procédé de conversion de données entre une plateforme électronique de gestion d'un site industriel et un système de navigation de personnes ou de véhicules habités ou non, la plateforme étant apte à générer des données dynamiques liées à l'exploitation du site industriel et le système de navigation étant apte à exploiter en temps réel des données cartographiques du site pour déterminer et mettre à jour en temps réel, en fonction d'ordres de mission, des trajectoires de déplacement de personnes, véhicules ou drones sur le site, le procédé comprenant les étapes suivantes :
- recevoir en entrée de façon dynamique de la part de ladite plateforme des données courantes, de types différents, d'exploitation du site industriel,
- en fonction du ou des types de données reçus, sélectionner une ou plusieurs règles de conversion mémorisées pour application auxdites données,
- traiter numériquement lesdites données courantes en utilisant la ou lesdites règles de conversion sélectionnées, pour engendrer à partir desdites données au moins une cartographie dynamique de valeur de risque(s) du site industriel,
- transmettre en sortie au système de navigation la ou lesdites cartographies dynamiques de valeur de risque(s), pour prise en compte par ledit système de navigation dans la mise à jour des trajectoires.

L'invention a également pour objet un programme d'ordinateur comportant des instructions logicielles qui, lorsqu'elles sont exécutées par un ordinateur, mettent en œuvre un tel procédé.

### Brève description des dessins

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés. Sur les dessins :
- la Fig. 1 est une vue d'ensemble d'un site physique équipé d'un système d'information basé sur une maquette numérique et d'un système de navigation de drones de surveillance, selon un exemple de réalisation de l'invention,
- la Fig. 2 est une vue d'ensemble d'une architecture numérique selon l'invention mettant en jeu le système d'information du site, un ensemble de systèmes de navigation et un convertisseur selon l'invention,
- la Fig. 3 illustre schématiquement un modèle de cartographie exploitée dans l'architecture numérique selon l'invention, et
- les Figs. 3A et 3B illustrent schématiquement et de façon simplifiée des contenus de cartographies exploitées dans l'architecture numérique selon l'invention.

### Description détaillée de formes de réalisation préférées

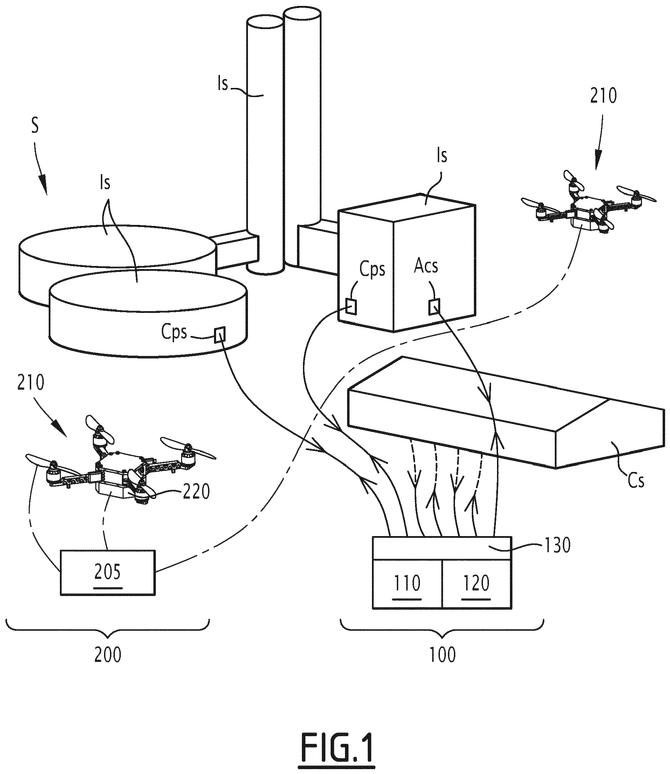

En référence tout d'abord à la Fig. 1, le contexte auquel s'applique l'invention comprend tout d'abord un système d'information 100 lié à un site S donné, en particulier un site industriel comprenant un ensemble de constructions Cs et d'installations Is. Ce système 100 sera également dénommé dans le présent mémoire « plateforme électronique de gestion » du site S.

Ce système 100 comprend de façon conventionnelle une ou plusieurs unités centrales de traitement 110 avec conventionnellement des processeurs, des unités de mémoire 120 et des canaux de communication 130 avec le monde extérieur.

La mémoire contient tout d'abord des données statiques telles que des définitions de types de bâtiments et de constructions, leurs dimensions, leurs matériaux, des notations de risques liées à leur contenu ou à leur fonctionnalité sur le site. On entend ici par « risque » toute caractéristique, situation, événement, etc. susceptible d'altérer en particulier la sécurité des personnes et de l'environnement, l'intégrité et le bon fonctionnement des équipements la performance du site, etc. Les risques mentionnés dans le présent paragraphe font l'objet d'une notation statique, mais on verra dans la suite comment des données de risques apparaissant dynamiquement sont pris en compte et traités.

Ces données constituent ensemble une modélisation statique du site.

Le système 100 comporte par ailleurs un ensemble de capteurs Cps et le cas échéant des actionneurs Acs permettant d'une part de surveiller un certain nombre de données de fonctionnement ou d'environnement du site, et le cas échéant d'appliquer certaines commandes à des actionneurs.

A noter que le système 100 n'est pas une simple chaîne de pilotage de process industriels, mais constitue plus largement d'un environnement numérique dédié à la surveillance, la maintenance et la sécurité du site.

L'acronyme PIM (« Plant Information Model » (par analogie au BIM « Building Information Model » dans le domaine de la construction), désigne de façon générique de tels systèmes. Le terme « Facility Information Model » (voir par exemple https://en.wikipedia.org/wiki/Facility information model) désigne également de tels systèmes. On utiliser également le terme de « maquette numérique » et l'on se référera aux définitions conventionnelles pour plus de détails sur l'architecture et les fonctionnalités de tels systèmes.

Sur le site est implémenté un système 200 de navigation d'équipements mobiles tels que des engins autonomes contrôlés à distance, par exemple des drones 210 ou robots terrestres, ce système comprenant de façon connue en soi une architecture numérique au sol, un ensemble de robots intelligents et un système de communication sans fil entre l'architecture au sol et chacun des robots. On entend ici par « architecture numérique au sol » toute la partie de l'intelligence hors robots, qui peut être concentrée ou répartie, le cas échéant dans un environnement de type « cloud ».

Par extension, on entend aussi par robot un terminal numérique au service d'un individu ou d'une équipe, capable d'effectuer un guidage en fonction d'un certain nombre de contraintes, ou encore un équipement connecté au système 200 et constitué par exemple d'une station automatisée 220 d'accueil et de recharge d'un robot.

Un tel système de navigation est fondé sur des données de types divers, topologiques et environnementales, statiques ou dynamiques, et permet de déterminer la trajectoire que doit adopter un équipement mobile pour se rendre d'un point A à un point B pour effectuer une mission.

Le document WO 2021 001768 A1 donne un exemple d'un tel système appliqué à des drones. Une représentation tridimensionnelle du site accompagnée d'un certain nombre de contraintes est exploitée par un processus de détermination de chemin, en fonction de coordonnées de départ et d'arrivée et d'un certain nombre desdites contraintes, et le chemin optimal est calculé, ce calcul étant ici effectué au sein du drone. Alternativement, la détermination de chemin peut être effectuée par l'architecture au sol et des instructions de vol sont transmises au drone.

Le système d'information 100 du site et le système de navigation d'engins 200 opèrent conventionnellement sur des données qui sont structurées et mémorisées de façon propre et dans des formats a priori non compatibles entre eux.

En particulier, le système d'information 100 du site industriel dispose d'un certain nombre de données statiques et dynamiques (données géographiques, données d'état de capteurs, données de maintenance, données météo, etc.) liées pour l'essentiel à l'exploitation du site et qui ne sont pas interprétables par le système de navigation 200.

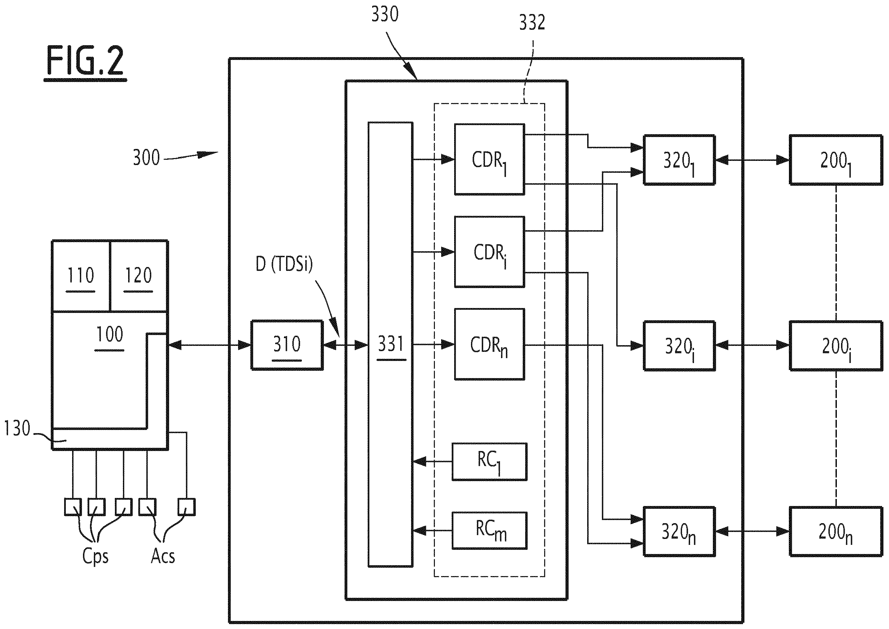

Selon l'invention et en référence maintenant à la Fig.2, un convertisseur unifié de données 300 a pour objet de permettre aux deux environnements 100, 200 d'échanger dynamiquement des données de façon utile à chacun des environnements numériques, sans avoir à modifier, ou à modifier significativement, les programmes informatiques qui servent chacun des environnements. Comme illustré, il peut exister sur le site plusieurs systèmes de navigation indépendants 200i, chacun étant relié au convertisseur.

On entend ici par « unifié » le fait qu'en principe le système 100 et le ou les systèmes de navigation 200 ou 200i n'échangent pas de données utiles à la navigation ou de données générées par les engins et utiles au site, autrement que par le convertisseur, ce qui garantit un fonctionnement fiable et cohérent de l'architecture d'ensemble.

Le convertisseur de données 300 comprend des interfaces 310, 320 et une unité de conversion 330.

Les données brutes ou prétraitées issues de l'un des environnements sont injectées dans l'unité de conversion 330 via un circuit d'interface respectif, à savoir :
- un circuit d'interface 310 entre l'unité de conversion 330 et le système d'information 100 du site S, et
- un circuit d'interface 320i entre l'unité de conversion 330 et un système de navigation respectif 200i.

Dans le sens allant du système d'information 100 du site vers un système de navigation 200, le circuit d'interface 310 reçoit des données du système 100. A cet effet, l'interface 310 peut comprendre notamment des routines exécutées de façon périodique ou à la demande et permettant de lire certaines données dans la mémoire du système 100, des routines de transcodage pour changer le formatage des données en un format lisible par l'unité de conversion, ou encore des routines de changement de référentiel, permettant d'assurer une correspondance biunivoque entre un référentiel espace-temps du système d'information 100 et un référentiel espace-temps du système de navigation 200. Alternativement, l'interface 310 peut implémenter un système de messagerie de haut niveau et un protocole associé pour structurer les échanges entre le système 100 et le convertisseur de données 300 de façon souple et pilotable.

L'unité de conversion 330 traite les données issues de l'interface 310 à l'aide de programmes de conversion faisant appel à des règles de conversion prédéfinies de façon à engendrer au moins une cartographie géographique dynamique, typiquement tridimensionnelle, de valeurs de risque du site industriel propre au site géré par le système d'information.

Enfin une interface 320i permet au système de navigation associé 200i d'accéder à ces données de cartographie pour leur prise en compte dans leur calcul et leur mise à jour des trajectoires comme on le verra en détail dans la suite.

On va maintenant décrire l'architecture générale du convertisseur.

### 1) Données du système 100 prises en compte par le convertisseur

De façon non limitative, la liste de données exploitées ou générées par le système 100 comprend en particulier les données suivantes :
- données statiques de localisation, dans un référentiel absolu (coordonnées GPS et altimétrie) ou dans un référentiel propre au site ;
- horloge du site ;
- données dynamiques de localisation d'opérateurs ou d'équipements tels que véhicules ;
- données fournies par des capteurs de mesure, comprenant les valeurs mesurées ainsi que les données de localisation des capteurs ;
- données statiques de dangerosité des zones du site, et tout particulièrement des données de zonage ATEX correspondant typiquement à des zones où des matières inflammables ou explosives sont potentiellement présentes,
- données statiques ou dynamiques de localisation d'interventions de maintenance et de travaux, avec à chaque fois l'étendue de la zone concernée, un instant de début réel ou présumé et un instant de fin présumé, ou des données de périodicité pour les travaux de maintenance récurrents.

### 2) Fonctionnement général

Dans le contexte de l'invention, une cartographie dynamique de risque CDR est constituée par une zone tridimensionnelle de l'espace pour laquelle un facteur de risque est définie en chaque point ou dans chaque parcelle élémentaire de la zone.

Le facteur de risque en chaque point ou pour chaque parcelle est une grandeur numérique matérialisant le risque associé à la présence d'une entité donnée en un lieu donné.

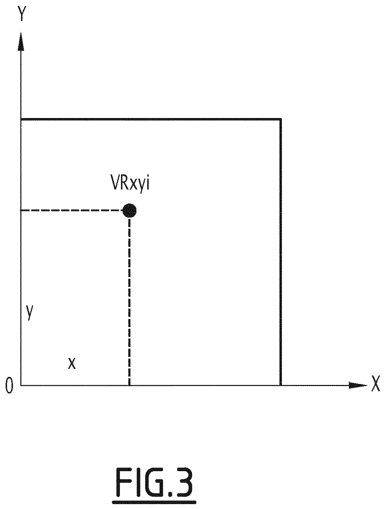

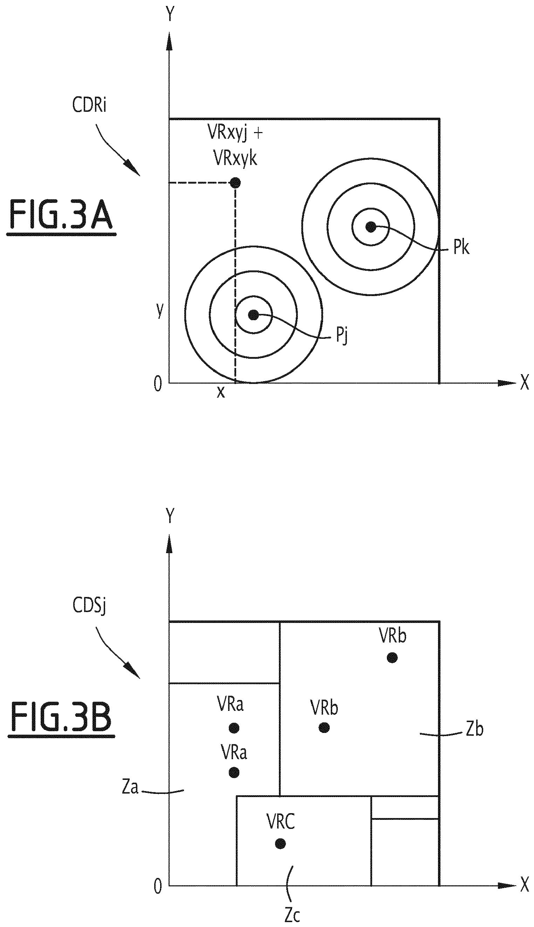

La Fig. 3 donne un exemple schématique d'une cartographie CDRi avec un ensemble de valeurs de risque VRxyi, représentant un type de risque particulier, en différents points de la carte de coordonnées x, y. Bien que la cartographie représentée soit bidimensionnelle, elle est le plus souvent dans la pratique tridimensionnelle.

De retour à la Fig. 2, pour chaque donnée D obtenue à partir du système 100 et ayant un certain type de donnée TDSi, le convertisseur élabore une cartographie propre CDRi d'une manière qui est associée au type de donnée.

Par exemple, une donnée de présence d'un certain mobile Mj tel qu'un opérateur (donnée de type « piéton » TDSi) en un point Pj du site donne lieu à la formation et à la mémorisation d'une cartographie dans laquelle la valeur de risque VRxyj en chaque point ou parcelle de la carte diminue, de façon linéaire ou non linéaire, avec l'éloignement de ce point ou parcelle par rapport au point Pj, la valeur maximale (au point Pj ou à son voisinage proche) étant déterminée en fonction du type de mobile. La Fig. 3A donne un exemple d'une telle cartographie représentée sous forme de cercles « iso-risque » (qui peuvent être par exemple des sphères ou des cylindres iso-risque dans une cartographie tridimensionnelle.

Bien entendu, par souci de simplicité, une même cartographie peut être générée à partir d'une série de données d'un même type TDSi. Dans l'exemple ci-dessus pour des données où le type TDSi est « présence de piétons », les valeurs de risques VRxyj, VRxyk associées à la présence de deux piétons Mj, Mk, situés aux points Pj, Pk, etc. sont additionnées pour donner une cartographie globale CDRi correspondant au type de donnée TDSi et donc de type « cartographie des risques liés aux piétons ».

Les cartographies de risques liées à des types de données voisins d'une donnée TDSi sus-décrite, par exemple un type de donnée TDSi' « véhicule de transport de personnes », peuvent également être combinées à des cartographies liées aux types de données TDSi « présence de piétons », à nouveau par sommation, pour former une cartographie de risques « présence humaine ». Alternativement, plutôt qu'une fonction de sommation, on peut recourir à une fonction Max pour choisir la valeur de risque maximale parmi un ensemble de différentes valeurs de risques, ou toute autre fonction permettant de tenir compte de plusieurs valeurs de risques différentes.

Selon un exemple, particulier, l'unité de conversion 330 peut générer une cartographie globale de type « cartographie des risques liés aux mobiles » en affectant à différents types de mobiles, différents degrés d'exposition au risque, avec un risque nominal élevé pour un mobile de type piéton, et un risque nominal moindre pour un mobile de type véhicule fermé, ces valeurs pouvant être des paramètres dans l'unité de conversion 330 comme on le verra en détail dans la suite.

Avantageusement, lors d'une sommation des risques individuels, la somme des valeurs de risque élémentaires en chaque point de la carte est plafonnée à une valeur maximale imposée par la règle associée.

La Fig. 3B illustre schématiquement une autre cartographie, de type statique cette fois-ci (notée CDSj), où les valeurs de risque VRa, VRb, etc. sont différentes les unes des autres mais invariables dans chaque zone associée Za, Zb, etc.

Selon une autre forme d'exécution, des cartographies correspondant à des risques de types fondamentalement différents (par exemple risque dynamique lié à la présence de mobiles et risque statique lié à un zonage ATEX figé) peuvent également être combinées entre elles, par sommation aux différents points ou aux différentes parcelles élémentaires de la carte, avec le cas échéant une pondération pour prendre en compte les importances relatives des différents types de risques.

Le système de navigation 200 ou chaque système de navigation 200i peut accéder aux données cartographiques générées et mémorisées par l'unité de conversion 330 et mémorisées dans une ou plusieurs cartographies (ou dans un cas le plus simplifié la cartographie unique) via l'interface 320 (ou 320i, selon les cas).

Les fonctions de cette interface sont notamment :
- en fonction du type de système de navigation, de fournir l'accès à une certaine cartographie CDR ou un certain groupe de cartographies CDRi mémorisée(s) dans l'unité de conversion 330,
- de transcoder les valeurs de risques, aux différents points ou en différentes zones de ces cartographies ou à différents points ou en différentes zones de parties seulement des cartographies, en jeux de valeurs, telles que des pondérations, exploitables directement par les systèmes de navigation pour déterminer des trajets de mobiles dans ces systèmes, étant observé que ce sont les systèmes de navigation qui décident de l'interprétation à donner aux données cartographiques issues du convertisseur ; en particulier un système de navigation peut décider comme on le détaillera plus loin, en fonction de métadonnées associées à un type de risque, et de facteurs propres au système, d'ignorer le risque, ou d'évaluer, moduler ou discriminer les données de risques qui lui sont fournies par le convertisseur.

### 3) Mise en œuvre concrète du convertisseur

De nouveau en référence à la Fig. 2, l'unité de conversion 330 du convertisseur est formée d'une architecture numérique comprenant conventionnellement des circuits de traitement numérique 331 associés à une ou plusieurs mémoires de travail et de stockage 332.

La mémoire 332 contient des données matérialisant un ensemble de règles de conversion RC1, ... RCm respectivement associées à différents types de données TDS1, TDS2, ... TDSn émanant du système 100 et extraites de celui-ci par l'interface 310.

Chaque règle de conversion RCi comporte dans la mémoire au moins une routine de calcul (ou au moins un lien vers au moins une routine de calcul) et un ensemble de paramètres, dont au moins certains sont susceptibles de varier au cours du temps ou d'être modifiés à partir d'instructions de modifications externes.

Certaines règles de conversion peuvent être communes à différents types de données sans que les paramètres ne soient toutefois identiques. Par exemple, pour prendre l'exemple des risques liés à la présence de mobiles décrit plus haut, une même règle de conversion peut être utilisée pour générer une cartographie de risques associée aux piétons et une cartographie de risques associée aux véhicules de transport de personnes, et le cas échéant à tous autres types de véhicules tels que véhicules d'intervention.

La même règle est ainsi mise en œuvre pour générer, en lien avec la présence d'un mobile en un point donné, des valeurs de risques dans une cartographie CDRi en fonction de paramètres comprenant par exemple, selon le type de mobile :
- une certaine valeur de risque maximal à l'emplacement du mobile, en fonction du type de mobile,
- une certaine loi de décroissance de la valeur de risque en fonction de la distance à l'emplacement du mobile.

Les cartographies dynamiques de risques CDRi de différents types sont générées par l'unité de conversion 330 et mémorisées dans sa mémoire 332, les types étant fonction notamment de la nature des systèmes de navigation 200i qui vont exploiter ces cartographies, l'interface 320i associée à un système de navigation 200 étant configurée pour extraire de tout ou partie de ces cartographies des données qui conviennent à un système de navigation donné.

A titre d'exemple, les systèmes de navigation 200i peuvent comprendre un système de navigation de drones, un système de navigation de véhicules, un système de navigation de piétons, etc.

### 4) Intégration avec le(s) svstème(s) de navigation

D'une façon générale, un système de navigation implémente un ou plusieurs algorithmes de recherche de chemin qui lui sont propres et dont un objectif peut être la minimisation d'un certain facteur ou « coût du trajet » pour déterminer la meilleure trajectoire. Dans un exemple d'implémentation, le coût du trajet est une grandeur générique dont le calcul repose en général sur des données telles que la distance parcourue, l'énergie nécessaire au suivi du trajet, les données météorologiques, la précision du système de positionnement utilisé, une valeur de risque associée à des segments d'un graphe définissant l'ensemble des trajets possibles, etc. Un système de navigation détermine un trajet en général de façon modifiable en fonction de l'évolution des données variables qui servent à élaborer le coût du trajet.

La demande de brevet WO2021001768A1 donne un tel exemple de système de navigation de drones avec prise en compte de telles données pour déterminer le trajet.

On peut noter ici que les données prises en compte notamment par un système de navigation 200i pour la détermination de trajet peuvent prendre la forme d'une cartographie propre, réalisée en exploitant via l'interface associée 320i des données obtenues des cartographies CDRi traitées par le convertisseur 300.

Un système de navigation donné 200i communique de façon régulière avec le convertisseur 300 (à une fréquence qui dépend notamment de la nature du système de navigation et de la fréquence à laquelle les données de cartographie sont mises à jour à partir des données du système 100), de manière à intégrer dans les itérations du calcul de trajet les données de risques telles que déterminées et mémorisées dans le convertisseur 300 comme on va le voir ci-dessous.

### 5) Mise à jour des données de détermination de trajet

Pour vérifier si les données de détermination de trajet d'un système de navigation 200i doivent être mises à jour, plusieurs approches peuvent être envisagées.

Dans une première approche, le système de navigation effectue une consultation périodique d'une cartographie CDRj via l'interface 320i, et calcule une somme de contrôle SCj des données constituant ladite cartographie ; les données ne sont réimportées à travers l'interface que si à une itération donnée la somme de contrôle a changé, révélant que la cartographie a été modifiée par l'unité de conversion 330 en réponse à une mise à jour des données provenant du système 100.

Ceci permet en particulier de limiter l'usage de la bande passante du réseau entre le convertisseur 300 et le système 200i, ainsi qu'au sein du système 200i dans le cas où les données nécessaires à la détermination de trajet sont transmises aux équipements mobiles 210 du système 200i en vue d'y effectuer localement la détermination de trajet.

Dans une deuxième approche, on implémente au sein des interfaces 310 et 320i un système de notifications entre le convertisseur 300 et les systèmes 100 et 200, respectivement, de façon à ce que la réception de la part du système 100 d'une nouvelle valeur d'une donnée provoque d'une part la mise à jour de la cartographie correspondante et d'autre par l'émission d'un message à destination du système 200i pour amener celui-ci à lire les données dont il a besoin dans la cartographie dont la modification lui a été signalée.

Un avantage particulier de cette deuxième approche réside en ce que la modification de la trajectoire d'un équipement mobile 210 d'un système 200i peut être réalisée en temps réel ou quasi-réel à l'apparition d'un nouveau risque au niveau du site géré par le système 100 (par exemple la détection d'une fuite de matière dangereuse par un capteur Cps dudit système).

Alternativement, il est possible de combiner les première et deuxième approches ci-dessus, qui sont complémentaires, en vue de réaliser un système apte à fonctionner en temps réel (temps de mise à jour faible) mais résilient vis-à-vis des possibles perturbations impactant le réseau de communication.

### 6) Performances

On comprend que les modalités d'interaction entre un système de navigation 200i et le convertisseur de données 300, notamment pour la modification de la cartographie en vue de prendre en compte de nouvelles données de risque, peut avoir un impact sur les performances d'ensemble, notamment dans le cas où les trajets des équipements mobiles 210 du système 200i sont déterminés par des moyens de traitement numérique embarqués dans ces derniers.

Les facteurs suivants sont à cet égard déterminants :
- temps de calcul et de mise à jour des cartographies au niveau de l'unité de conversion 330,
- temps de transmission sur le réseau au sein du système de navigation 200i,
- temps de calcul des trajectoires au sein des équipements mobiles 210.

Ainsi il peut être avantageux de s'appuyer sur une représentation la plus simple possible d'une cartographie dynamique de risque CDR sans toutefois que cela n'altère le fonctionnement de l'ensemble.

A cet égard, les simplifications suivantes sont avantageusement adoptées :
(i) représentation de la cartographie sous la forme d'une fonction à plusieurs variables, qui permet de ne pas avoir à lire et transférer l'ensemble d'une cartographie mais de lire et transférer seulement la fonction (une fois pour toutes) et les variables lorsqu'elles sont modifiées ;
(ii) représentation de la cartographie sous la forme d'un ensemble de zones dans chacune desquelles le facteur de risque est constant.

L'approche (i) permet de minimiser le temps de traitement au sein de l'unité de conversion 330 ainsi que le temps de transmission sur le réseau du système 200i, tandis que la solution (ii) permet de minimiser la complexité induite au sein du système de navigation 200, la prise en compte d'une notation géolocalisée du risque au sein de chaque équipement mobile 210 revenant alors à simplement identifier les zones traversées à partir de la position de l'équipement mobile.

Une autre simplification peut consister, au sein de l'unité de conversion 330, à regrouper les cartographies CDRi en fonction de critères tels que la fréquence à laquelle elles sont modifiées, et leur volume de données.

Par exemple, une cartographie de risques « capteurs » déterminée à partir de données de capteurs Cps du système d'information 100 et en combinant les valeurs de risques individuellement associées à chacun des capteurs peut constituer une cartographie extrêmement complexe dont la mise à jour peut s'effectuer à une fréquence extrêmement élevée, par exemple toutes les X secondes.

De la même manière et toujours à titre d'exemple, une cartographie de risques « présence humaine » peut être extrêmement riche en données et nécessiter de fréquentes mises à jour.

En revanche, une cartographie de risques « travaux » liée à la mise en service et à la suppression de zones temporaires de travaux sur le site S aura une complexité bien moindre et devra être mise à jour beaucoup moins fréquemment, par exemple toutes les heures ou quotidiennement.

D'autres cartographies peuvent être lourdes en données avec une mise à jour peu voire très peu fréquente (par exemple données de zonage ATEX statique), ou au contraire légères en données avec une mise à jour fréquente (par exemple données d'environnement général telles que données météo : température, vent, précipitations, etc.).

De façon avantageuse, l'unité de conversion 330 organise les différentes cartographies CDRi (y compris leurs éventuelles combinaisons) de façon à optimiser l'usage de la ressource réseau, notamment en évitant d'avoir à transporter des données de cartographie lourdes à fréquence élevée, et plus particulièrement en évitant de regrouper ensemble des cartographies lourdes à mise à jour peu fréquente avec des cartographies éventuellement plus légères mais ayant une fréquence de mise à jour plus élevée.

### 7) Retour d'informations

On entend ici par « retour d'informations » la capacité de l'ensemble à injecter des données générées au sein d'un système de navigation 200i dans le système d'information 100 du site, via le convertisseur de données 300 mais cette fois-ci dans le sens opposé.

Par exemple, des équipements mobiles tels que des drones équipés de capteurs propres (indépendants de ceux du système 100) peuvent élaborer des données utiles à d'autres systèmes de navigation 200j et/ou au système d'information 100. Un exemple particulier d'un capteur est une caméra de prise de vues, auquel cas un traitement par analyse d'images mis en œuvre au sein de l'équipement mobile, ou le cas échéant au niveau d'un équipement au sol du système 200i, pour identifier dans une scène capturée par la caméra des personnes ou véhicules au sol. Un autre exemple est un capteur de gaz polluants.

Ces données sont appliquées à l'unité de conversion 330 via l'interface 320i :
- soit pour mise à jour locale d'une cartographie associée, de façon que les données mises à jour de cette cartographie puissent être exploitées par d'autres systèmes de navigation ;
- soit (les deux approches pouvant être cumulatives) pour être injectée dans le système 100 afin d'y mettre à jour la présence d'équipes au sol, d'effectuer des tests de vraisemblance par rapport à des données de présence générées au sein du système 100, etc.

Une autre utilité possible de ce retour d'informations d'un système de navigation 200i vers le système d'information 100 est de permettre la vérification du fait qu'une opération de maintenance donnée prévue par le système d'information 100 a été réalisée ou non, et d'agir sur la planification des interventions gérée par ledit système 100.

Une autre fonctionnalité consiste, pour chaque équipement mobile 210 d'un système de navigation 200i, à fournir à l'unité de conversion 330 sa position courante, pour mettre à jour la ou les cartographies concernées à l'usage des autres systèmes de navigation et/ou pour nourrir les données du système d'information 100.

### 8) Pilotage par le système d'information du site

Dans une implémentation avantageuse, le système d'information peut agir sur les paramètres de fonctionnement de l'unité de conversion 330 via l'interface 310. Pratiquement, cette action peut être effectuée soit par un système de messagerie spécifique implémenté dans l'interface 310, contenant des instructions de changement de paramètres, soit véhiculant les données en les accompagnant de métadonnées constituant des paramètres de mise en œuvre de la règle associée au type de donnée considéré, comme expliqué plus haut. Les métadonnées jouent un rôle essentiel en ce qu'elles permettent à un système de navigation de décider de comment interpréter les données de risque. Ces métadonnées peuvent comprendre une valeur de risque unitaire maximal (RUM - voir plus loin), un type de risque, des valeurs temporelles de validité du risque, etc.). On peut également implémenter des métadonnées générales, associées au site ou à une typologie de site et non directement liées aux types de risques.

Cette action sur les paramètres grâce aux métadonnées permet notamment, en fonction de contraintes d'exploitation qui sont propres au gestionnaire du site, implémentant le système d'information 100, ou encore d'événements divers dont il a connaissance, de moduler les risques acceptables pour les équipements mobiles d'un système de navigation 200, ce dernier restant dans tous les cas en charge de la prise en compte de ces risques pour le déplacement des robots.

En outre le système d'information peut moduler le risque unitaire maximal (RUM). Cette grandeur décrit le risque maximal accepté pour une entité de nature donnée sur une distance unitaire de référence. En outre, il peut interdire de manière temporaire le survol de zones de l'espace, dans le cadre de l'utilisation de drones, de manière limitée dans le temps, ou non, afin par exemple d'interdire aux drones de survoler une zone de travaux. Pour ce faire il lui suffit d'ajouter autour de la zone de travaux une zone de risque dont le risque unitaire est supérieur au risque unitaire maximal. Ce faisant la zone devient interdite d'accès et les robots n'y accéderont pas. Une autre approche peut consister à réduire la valeur de seuil RUM localement au lieu d'augmenter artificiellement la valeur du risque unitaire au-delà de la valeur de seuil RUM, de telle sorte que, sans avoir à être modifiée, la valeur de risque unitaire devient supérieure à la valeur de seuil RUM, interdisant ainsi l'accès à la zone.

La valeur de seuil RUM peut également être modulée en fonction de la politique du gestionnaire du site en matière d'équipement de protection individuelle (par ex. port du casque obligatoire ou non).

### 9) Exemples de données traitées par le convertisseur

### a) Déclenchement de l'arrêt total au niveau du système 100

Le système d'information 100 est ici apte, en réponse à des évènements et/ou à une action au niveau d'une interface utilisateur, à générer un signal ESD (« Emergency Shut-Down » en anglais). Ce signal est appliqué au convertisseur 300 via l'interface 310, et la règle de conversion RCi associée à ce type de donnée est définie de manière à générer une cartographie avec un risque maximal en tout point, qui correspond dans les faits à une contrainte de type « approche interdite » ou encore à une notation « zone d'exclusion » dans toutes les zones. La mise à jour de la cartographie dédiée à ce type de risque dans le convertisseur 300 provoque le transfert de ces nouvelles valeurs de risque à chaque système de navigation 200i, de manière que chaque système déclenche, en fonction de ses propres règles opérationnelles, les actions appropriées telles qu'évacuation ou mise sous abri des équipements mobiles de type robots terrestres, atterrissage immédiat des équipements mobiles de type drones, etc.). Alternativement, un évènement de type ESD peut être transmis en exploitant les métadonnées et permettre à un système de navigation d'adopter toute procédure particulière audit système.

Ceci permet ainsi d'implémenter un comportement de base conservateur (interdiction de survol), ou un comportement plus élaboré, en fonction du système.

### b) Déclaration d'une zone de travaux sur le site

Le système d'information 100 génère des données géographiques d'une zone de travaux, ces données pouvant comprendre des données de périmètre des travaux, des données de type de travaux, ainsi que des données temporelles de début et de fin des travaux. A réception de ces informations via l'interface 310, le convertisseur 300 met alors à jour la cartographie correspondante (typiquement une cartographie de type « travaux et maintenance » en générant dans celle-ci un périmètre correspondant, soit identique, soit plus large, et une notation de risque fixe ou pouvant être différente selon le type de travaux. La règle de conversion RCi associée consiste donc à définir dans la cartographie une zone basée à la zone de travaux signalée et à appliquer à cette zone une valeur de risque uniforme conduisant typiquement à ce que les systèmes de navigation interdisent toute circulation d'équipements mobiles dans cette zone. A cette catégorie peuvent également appartenir des données relatives à l'installation d'équipements de chantier. Par exemple l'installation d'un équipement de type grue conduira une règle de conversion RCi associée à ce type d'équipement à définir comme zone interdite un cylindre vertical dont la hauteur est supérieure (marge de sécurité) à la hauteur de la grue et dont le rayon est supérieur (marge de sécurité à nouveau) à la longueur de la flèche de la grue.

Alternativement, c'est le système d'information 100 qui construit ce volume cylindrique, qui est traité par le convertisseur 300 comme un volume de travaux parmi d'autres.

A noter qu'une cartographie de type « zone de travaux » ou « zone d'interventions temporaires » est, par nature, mise à jour moins fréquemment qu'une zone de risque liée à des capteurs. Elle peut donc être relativement lourde en volume de données (par sommation de nombreux risques individuels) sans que ce ne soit problématique.

A noter qu'au niveau du système d'information 100, la zone de travaux peut être soit déclarée par un opérateur via une interface d'entrée, soit détectée et définie automatiquement (par exemple localisation d'un ou plusieurs engins appartenant à une catégorie prédéfinie « engin de travaux » et/ou d'une ou plusieurs personnes géolocalisées avec une fonction « travaux » attachée). Un retour d'informations par exemple par analyse d'images prises par un robot du système de navigation et propagées vers le système d'informations du gestionnaire de site via le convertisseur peut également être exploité (voir plus loin exemple h)).

### c) Présence de zones ATEX (statique) ou détection de fuites (dynamique)

De nombreux sites industriels, tels que les sites des industries chimiques ou d'hydrocarbures, contiennent dans leur système d'information des données de zonage « ATEX » (voir par exemple https://fr.wikipedia.org/wiki/Règlementation ATEX).

Un risque d'explosion peut être pris en compte dans une cartographie dédiée générée par le convertisseur 300 d'une part statiquement à partir d'un zonage ATEX statique présent dans le système d'information 100 du gestionnaire de site, et d'autre part dynamiquement à partir d'une détection de fuite géolocalisée par un capteur Cps du système 100, fixe ou embarqué.

La notation du risque dans la cartographie est déterminée en fonction du type de zone ATEX ou, en cas de détection de fuite, en fonction de la nature du gaz et sa concentration déterminée par le capteur.

Pour ce qui concerne le zonage ATEX statique, la règle de conversion RCi associée consiste à reproduire le zonage dans la cartographie associée, et à convertir la catégorie ATEX de chaque zone en une valeur de risque.

Concernant les risques dynamiques, en cas de détection de fuite, comme on l'a évoqué plus haut, une règle de conversion RCi associée est par exemple configurée pour fixer une valeur de risque sur le lieu du capteur à un niveau correspondant en la concentration en gaz mesurée, et pour faire décroître cette valeur de risque, de manière linéaire ou non linéaire, en fonction de la distance de chaque point ou parcelle de la cartographie à l'emplacement du capteur. D'autres facteurs telles que la température ambiante, un vecteur de vent, etc., peuvent être pris en compte par la règle de conversion RCi.

### d) Localisation d'émissions polluantes

La démarche peut être similaire à celle-ci-dessus, avec le cas échéant des natures de risques différents et en conséquence une notation potentiellement différente du risque, soit dans la même cartographie, soit dans une cartographie dédiée de type « risque polluants ».

### e) Présence/localisation de personnel et de véhicules

Comme on l'a évoqué plus haut, le système d'information 100 du gestionnaire du site peut être connecté à des équipements de géolocalisation de personnes et/ou de véhicules.

Les informations de géolocalisation remontées par ces équipements vers le système 100, en général de façon régulière et automatique, peuvent être soit prétraitées par ledit système pour adresser les données retraitées au convertisseur (par exemple en éliminant des données non utiles), soit directement transférées au convertisseur pour qu'une règle de conversion RCi associée mette à jour une cartographie de risque (par exemple « risque présence humaine ») en fonction du type de véhicule ou personne, éventuellement en fonction également de la densité de véhicules ou de personnes, et en générant par exemple une zone avec un niveau de risque capable d'être traité comme une zone d'exclusion par un système de navigation, zone dont les contours peuvent être déterminés en fonction de ces différentes informations.

### f) Prise en compte des réseaux de transport et des stockages de fluides

Le système d'information 100 du gestionnaire de site peut comprendre des données de tuyauteries ou autres conduits avec par exemple des données de matériau, de catégorie de résistance mécanique, d'état actif/inactif, de type de fluide transporté, de pression du fluide. Le convertisseur peut incorporer une règle de conversion RCi associée capable de générer une cartographie de risque dédiée à partir de ces données, avec potentiellement une mise àjour lors d'un changement (par exemple variation de pression ou de température anormale, mise en activité ou désactivation d'une tuyauterie, etc.).

De la même manière, le système d'information peut contenir des données dynamiques concernant des cuves, bacs, citernes, etc. avec également ici des données de niveau. Ces données de niveau peuvent être exploitées par une règle de conversion RCi dédiée pour mettre à jour dans la cartographie le niveau de risque associé.

### g) Autres zones de risques

Le système d'information 100 peut prendre au compte tout autre type de zone de risque ou d'exclusion, notamment à partir de tout paramètre d'environnement fourni au système (données météo, données sismiques, etc.). Le convertisseur est alors configuré pour détenir une règle de conversion RCi associée apte à maintenir à jour une ou plusieurs cartographies de risques correspondantes.

### 10) Retour d'informations d'un système de navigation 200 vers le système d'information du site

Comme indiqué plus haut sous l'intitulé « Retour d'informations », un système de navigation 200 peut être utilisé pour remonter des informations, notamment des informations géolocalisées, vers le système d'information du gestionnaire de site. Ce retour d'informations peut être exploité pour remonter vers ledit système via le convertisseur, à partir de véhicules (véhicules terrestres, drones, robots terrestres, personnes, etc.) utilisant un système de navigation et comportant différents types d'équipements et de capteurs, des informations recueillies par ces capteurs.

Ces informations peuvent comprendre :
- des données de perturbation du champ magnétique (altération des fonctions compas),
- des données de détection de gaz,
- des données de perturbation d'un réseau de communication entre les équipements exploitant le système de navigation et d'autres équipements ou le sol (LTE, liens radio conventionnels, etc.),
- des données de perturbation des systèmes de positionnement satellitaires GNSS (système GPS ou autre).

Dans ce cas, l'unité de conversion possède une fonction de conversion inverse qui est configurée pour :
- recevoir d'un certain système de navigation, via l'interface 320, des informations détectées au sein de ce système (typiquement par un équipement mobile), comprenant au minimum des données de géolocalisation et une valeur détectée,
- effectuer si nécessaire un reformatage de ces informations pour les rendre compréhensibles par le système d'information 100 du site,
- transmettre au système d'information 100, via l'interface 310, les données correspondantes, de telle manière que ledit système 100 voie cette arrivée de données de façon identique ou analogue à la lecture d'une donnée d'un capteur associé audit système.

### 11) Prise en compte des valeurs de risques par le ou les systèmes de navigation

On peut mettre en œuvre sur le site différents systèmes de navigation avec des équipements mobiles différents ou ayant différentes propriétés, soit un système de navigation unique ayant des équipements mobiles différents ou ayant différentes propriétés.

Par exemple, un certain type de drone peut être capable de voler dans un certain environnement dangereux, tandis qu'un autre type de drone ne l'est pas.

Ainsi, en fonction des caractéristiques d'un équipement mobile donné, il est possible grâce à l'architecture de la présente invention d'amener cet équipement à « choisir » (par paramétrage) les cartographies de risques dont il a besoin, et à ignorer des cartographies non nécessaires.

Par exemple, pour un drone dont la vocation est de filmer le déroulement de travaux dans une zone donnée, la détermination de trajet réalisée pour ce drone ne prendra pas en compte la cartographie « risques liés aux travaux ».

On comprend à la lecture de ce qui précède que la présente invention, permet d'intégrer à un site un ou plusieurs systèmes de navigation sans avoir à modifier ni l'architecture du système d'information 100 gérant le site, ni l'architecture des systèmes de navigation, l'unité de conversion et ses interfaces permettant à ces univers distincts de partager de façon synchrone tous types d'informations susceptibles de les concerner tous les deux.

Bien entendu, l'homme du métier saura appréhender de nombreuses variantes et modifications.

En particulier les architectures matérielles déployées pour mettre en œuvre l'invention peuvent largement varier quant à leur nature et à leurs emplacements physiques.

## Revendications

1. Convertisseur unifié de données entre une plateforme électronique (100) de gestion d'un site industriel et au moins un système de navigation (200i) sur ledit site, le convertisseur étant apte à générer des données dynamiques liées à l'exploitation du site industriel et le(s) système(s) de navigation étant apte(s) à exploiter notamment des données cartographiques du site pour mettre à jour en temps réel, en fonction d'ordres de mission, des trajectoires de déplacement de personnes et/ou véhicules habités ou non habités (210) sur le site, le convertisseur étant **caractérisé en ce qu'**il comprend :
- un module d'interface (310) avec la plateforme électronique (100) de gestion apte à recevoir de façon dynamique de la part de ladite plateforme des données courantes de types (TDSi) différents, d'exploitation du site industriel,
- un module de conversion (330) apte à traiter numériquement lesdites données courantes en fonction de règles de conversion (RCi) mémorisées, pour engendrer à partir desdites données au moins une cartographie dynamique de valeur de risque(s) (CDRi) du site industriel,
- au moins un module d'interface (320i), communiquant avec un système de navigation associé (200i), apte à sélectivement transmettre audit système de navigation associé des données de risque contenues dans la ou lesdites cartographies dynamiques de valeur de risque(s) (CDRi), pour prise en compte par ledit système de navigation associé dans la mise à jour des trajectoires.

2. Convertisseur selon la revendication 1, **caractérisé en ce qu'**il comprend des moyens (320i) pour adapter la cartographie générée en fonction de la nature du système de navigation utilisateur de ladite cartographie sur la base d'informations caractéristiques du système de navigation (200i), communiquées par ledit système au module d'interface (320i).

3. Convertisseur selon la revendication 1, **caractérisé en ce qu'**au moins une cartographie (CDRi) est tridimensionnelle.

4. Convertisseur de données selon la revendication 1, 2 ou 3, **caractérisé en ce que** lesdites données courantes de différents types (TDSi) comprennent des données choisies dans un groupe comprenant :
- des données de localisation d'opérateurs,
- des données de capteurs,
- des données de zonage de risque,
- des données de localisation d'interventions de maintenance ou de réparation.

5. Convertisseur de données selon la revendication 4, **caractérisé en ce que** les données comprennent des données générées par au moins un équipement mobile (210) lié à une personne ou un véhicule habité ou non utilisant ledit système de navigation (200i).

6. Convertisseur de données selon l'une des revendications 1 à 5, **caractérisé en ce que** le module de conversion (330) est apte à mémoriser différentes règles de conversion (RCi) pour différents types de données.

7. Convertisseur de données selon l'une des revendications 1 à 6, **caractérisé en ce qu'**au moins certaines règles de conversion (RCi) du module de conversion sont communes à au moins deux types différents (TDSi) de données et configurées pour prendre en compte lesdites données de types différents pour générer une cartographie commune auxdites données de types différents.

8. Convertisseur de données selon l'une des revendications 1 à 7, **caractérisé en ce qu'**au moins une cartographie dynamique de valeur(s) de risque (CDRi) comprend une pluralité de plages géographiques (Za, Zb, ...), à tous emplacements d'une plage donnée étant associée la même valeur de risque (VRa, VRb, ...).

9. Convertisseur de données selon l'une des revendications 1 à 8, **caractérisé en ce qu'**au moins une cartographie dynamique de risque comprend (CDRi) des valeurs de risque(s) (VRxyi) potentiellement différentes pour chaque point définissant ladite cartographie.

10. Convertisseur de données selon l'une des revendications 1 à 9, **caractérisé en ce que** lesdites données courantes de différents types comprennent des données de type cartographique.

11. Convertisseur de données selon la revendication 10, **caractérisé en ce que** les règles de conversion (RCi) associées aux données courantes de type cartographique comprennent des règles de conversion de données en valeurs de risque(s) (VRa, VRb, ...) et des règles de conversion de référentiel.

12. Convertisseur de données selon l'une des revendications 1 à 11, **caractérisé en ce que** certaines données courantes d'exploitation du site sont des données temps réel fournies à partir d'au moins un équipement mobile (210) appartenant à un système de navigation (200i) se déplaçant sur le site et appliquées en retour à la plateforme électronique (100) de gestion du site en tant que données courantes via le convertisseur de données (300).

13. Convertisseur de données selon la revendication 12, **caractérisé en ce que** lesdites données temps réel fournies à partir d'au moins un véhicule comprennent des données de présence sur site obtenues par analyse d'images prises avec un capteur d'images de l'équipement mobile (210).

14. Procédé de conversion de données entre une plateforme électronique de gestion d'un site industriel et un système de navigation de personnes ou de véhicules habités ou non, la plateforme étant apte à générer des données dynamiques liées à l'exploitation du site industriel et le système de navigation étant apte à exploiter en temps réel des données cartographiques du site pour déterminer et mettre à jour en temps réel, en fonction d'ordres de mission, des trajectoires de déplacement de personnes, véhicules ou drones sur le site, le procédé comprenant les étapes suivantes :
- recevoir en entrée de façon dynamique de la part de ladite plateforme des données courantes, de types différents, d'exploitation du site industriel,
- en fonction du ou des types de données reçus, sélectionner une ou plusieurs règles de conversion mémorisées pour application auxdites données,
- traiter numériquement lesdites données courantes en utilisant la ou lesdites règles de conversion sélectionnées, pour engendrer à partir desdites données au moins une cartographie dynamique de valeur de risque(s) du site industriel,
- transmettre en sortie au système de navigation la ou lesdites cartographies dynamiques de valeur de risque(s), pour prise en compte par ledit système de navigation dans la mise à jour des trajectoires.

15. Programme d'ordinateur comportant des instructions logicielles qui, lorsqu'elles sont exécutées par un ordinateur, mettent en œuvre un procédé selon la revendication 14.
